(19) **Europäisches Patentamt / European Patent Office / Office européen des brevets**

(11) **EP 3 893 117 B1**

(12) **FASCICULE DE BREVET EUROPEEN**

(45) Date de publication et mention
de la délivrance du brevet:
**13.12.2023 Bulletin 2023/50**

(21) Numéro de dépôt: **21166806.6**

(22) Date de dépôt: **02.04.2021**

(51) Classification Internationale des Brevets (IPC):
**G06F 11/10** *(2006.01)*

(52) Classification Coopérative des Brevets (CPC):
**G06F 11/1004**

(54) **CIRCUIT DE VÉRIFICATION DU CONTENU DE REGISTRES**

ÜBERPRÜFUNGSSCHALTKREIS DES INHALTS VON REGISTERN

CIRCUIT FOR CHECKING THE CONTENTS OF RECORDS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.04.2020 FR 2003541**

(43) Date de publication de la demande:
**13.10.2021 Bulletin 2021/41**

(73) Titulaire: **STMICROELECTRONICS (GRENOBLE 2) SAS**
**38000 Grenoble (FR)**

(72) Inventeurs:
• **TRUNDE, Gregory**
**38019 GRENOBLE (FR)**
• **DUTEY, Denis**
**38560 JARRIE (FR)**

(74) Mandataire: **Cabinet Beaumont**
**4, Place Robert Schuman**
**B.P. 1529**
**38025 Grenoble Cedex 1 (FR)**

(56) Documents cités:
**US-A1- 2013 073 921 US-A1- 2017 060 673**

EP 3 893 117 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Processed by Luminess, 75001 PARIS (FR)

**Description**

Domaine technique

La présente description concerne de façon générale les dispositifs électroniques et plus précisément, les dispositifs comprenant un circuit de vérification du contenu de registres.

Technique antérieure

Un registre est un emplacement de mémoire volatile, généralement interne à un processeur de traitement numérique. Un registre est généralement utilisé pour stocker temporairement un mot de donnée. Il peut s'agir d'une instruction (opérateur), d'une variable (opérande) ou d'une commande.

Par exemple, dans le cas d'un véhicule, des registres peuvent contenir des informations telles qu'une valeur représentative du niveau de fermeture d'une vitre, ou des informations en rapport avec le fonctionnement de la voiture (vitesse, température du moteur, etc.).

Il est donc important de s'assurer que ces informations soient correctes et fiables et ne soient pas modifiées accidentellement, par exemple par des rayonnements cosmiques, pour notamment assurer la sécurité des utilisateurs.

La demande de brevet US 2017/060673 décrit un dispositif de protection de parité d'un registre.

Résumé de l'invention

Un mode de réalisation pallie tout ou partie des inconvénients des circuits de vérification du contenu de registres connus.

Un mode de réalisation prévoit un dispositif tel que défini dans les revendications.

Un autre mode de réalisation prévoit un procédé tel que défini dans les revendications.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 illustre, schématiquement et partiellement, un mode de réalisation d'un dispositif électronique comprenant un circuit de vérification du contenu de registres ; et

la figure 2 représente plus en détail une partie de la figure 1.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

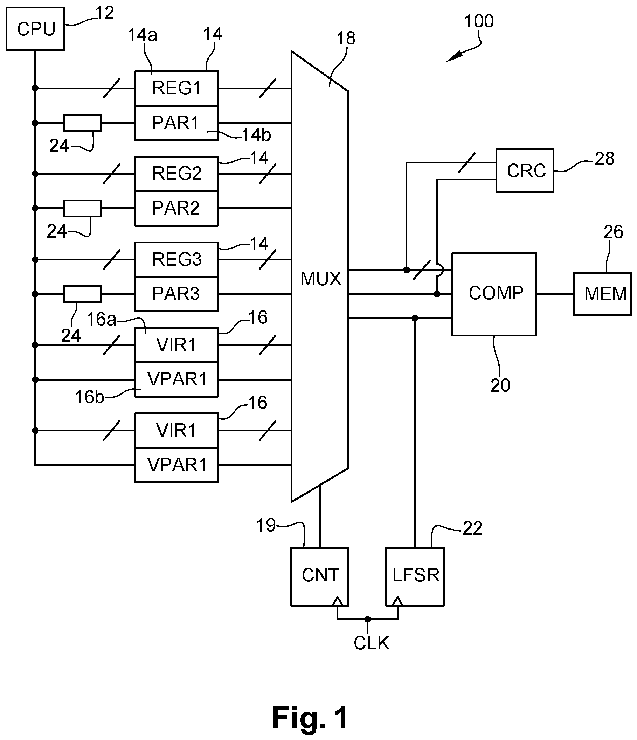

La figure 1 illustre schématiquement et partiellement un mode de réalisation d'un dispositif électronique 100 comprenant un circuit de vérification du contenu de registres. Le dispositif 100 est par exemple un système de commande d'un véhicule.

Selon un mode de réalisation, le dispositif 100 comprend, des registres de vérification 16. Les registres 16 sont des registres dédiés au processus de vérification et leur contenu n'impacte pas les fonctions commandées par le dispositif 100. Le dispositif 100 comprend au moins deux registres de vérification 16, de préférence exactement deux registres 16, comme représenté en figure 1.

Chaque registre 16 comprend une première partie 16a dans laquelle est stockée un mot binaire VIR1, VIR2. Par exemple, chaque mot VIR1, VIR2 a une taille supérieure ou égale à 8 bits, par exemple égale à 32 bits.

De préférence, les mots binaires VIR1, VIR2 ne changent pas de valeur durant le fonctionnement du dispositif 10, et constituent en quelque sorte des mots de référence.

Les mots binaires des registres 16 sont de préférence choisis pour que chaque emplacement de la première partie 16a ait, dans au moins un des mots binaires VIR1, VIR2, toutes les valeurs possibles. Autrement dit, les mots binaires des registres 16 sont choisis de telle manière que les bits d'un même rang des registres 16 comprennent au moins deux bits complémentaires.

Ainsi, un bit de chaque emplacement, ou de chaque rang, des premières parties 16a a la valeur '1' dans au moins un des registres de vérification 16 et a la valeur '0' dans au moins un des registres de vérification 16.

Par exemple, un des registres 16 contient, dans la première partie 16a, un mot formé entièrement de '0' et un autre registre 16 contient, dans la première partie 16a, un mot formé entièrement de '1'.

De préférence, un des registres 16 contient, dans la première partie 16a, une alternance de '1' et de '0', commençant par un '0', et un autre des registres 16 contient, dans la première partie 16a, une alternance de '1' et de '0', commençant par un '1'.

Chaque registre 16 comprend une deuxième partie 16b, dans laquelle est stocké un bit de vérification VPAR1, VPAR2, par exemple un bit de parité.

Chaque bit de vérification VPAR1, VPAR2 est obtenu en appliquant une fonction f au mot binaire écrit dans la première partie du registre correspondant. La fonction f comprend une première fonction f1 appliquée aux mots de donnée que l'on souhaite stocker dans les registres et une deuxième fonction f2 appliquée au résultat de la fonction f1.

La fonction f1 est par exemple une fonction usuelle permettant d'obtenir un bit de vérification à partir d'un mot de donnée. Par exemple, la fonction f1 est une fonction permettant d'obtenir un bit de parité. Selon un autre exemple, la fonction f1 est un code correcteur d'erreur (par exemple un code de Hamming), une fonction de signature ou, plus généralement, toute fonction dont le résultat dépend des états des bits du mot de donnée.

Les informations contenues dans les registres 16, c'est-à-dire les mots de donnée VIR1, VIR2 et les bits de vérification VPAR1, VPAR2, sont de préférence écrites "en dur", c'est-à-dire fixées, de façon immuable, à la fabrication du dispositif.

Le dispositif 100 comprend en outre une unité centrale de traitement (CPU - Central Processing Unit) 12, ou processeur 12. L'unité 12 est par exemple configurée pour commander des fonctions non représentées du dispositif 100.

Le dispositif 100 comprend, de plus, au moins un registre 14. Trois registres 14 sont représentés en figure 1.

Chaque registre 14 comprend une première partie 14a dans laquelle un mot de donnée REG1, REG2, REG3 est stocké. Chaque mot de donnée REG1, REG2, REG3 constitue une information stockée dans le registre. Chaque mot de donnée constitue une information que l'on veut pouvoir vérifier. Chaque mot de donnée REG1, REG2, REG3 est un mot binaire. Par exemple, chaque mot de donnée a une taille supérieure ou égale à 8 bits, par exemple égale à 32 bits. De préférence, les mots de données REG1, REG2, REG3 ont tous la même taille. De préférence, les mots binaires VIR1, VIR2 des registres 16 ont la même taille que les mots de données des registres 14.

Chaque registre 14 comprend une deuxième partie 14b, dans laquelle est stockée un bit de vérification PAR1, PAR2, PAR3, par exemple un bit de parité.

Les bits de vérification sont, de façon générale, obtenus en appliquant la fonction f aux mots de donnée que l'on souhaite stocker dans les registres.

La fonction f, c'est-à-dire la combinaison des fonctions f1 et f2 est, par exemple, appliquée par des circuits logiques. Par exemple, les fonctions f1 et f2 sont appliquées par un même circuit 24. Par exemple, un circuit 24 est couplé entre chaque registre 14 et l'unité 12.

A titre de variante, la fonction f est par exemple appliquée par l'unité 12 aux mots de donnée que l'on souhaite stocker dans les registres.

Ainsi, lors de l'écriture d'un des registres 14, l'unité 12 fournit par exemple le mot de donnée au circuit 24 associé à ce registre et le circuit 24 applique, la fonction f1, puis la fonction f2, à ce mot de donnée. La fonction f2 est donc appliquée au résultat de la fonction f1. Le résultat de la fonction f2 est le bit de vérification et est écrit dans la deuxième partie 14b dudit registre. Parallèlement, le mot de donné est écrit, de préférence sans modification dans la première partie du registre.

A titre de variante, les informations contenues dans les registres 14, c'est-à-dire les mots de donnée REG1, REG2, REG3 et les bits de vérification PAR1, PAR2, PAR3 sont au moins en partie générés et écrits dans les registres 14 par l'unité 12. Le contenu des registres est par exemple écrit à partir du contenu d'une mémoire non-volatile ou est généré par un circuit non représenté.

Un mot binaire commun est associé à l'ensemble formé par les registres 14 et 16 du dispositif 100. Le mot binaire comprend de préférence au moins autant de bits que le dispositif 100 comprend de registres 14 et 16. Chaque registre 14 et 16 est associé à un bit du mot commun. Dans l'exemple de la figure 1, le mot commun comprend 5 bits, les bits étant chacun associé respectivement aux registres REG1, REG2, REG3, VIR1 et VIR2.

Le mot commun est par exemple pseudo-aléatoire. Le mot commun est par exemple généré, ou fourni, en continu par un circuit 22. Le circuit 22 est par exemple un registre à décalage à rétroaction linéaire (LFSR - Linear Feedback Shift Register). Le mot commun comprend au moins une valeur '1' et au moins une valeur '0'. Le mot commun n'est donc pas entièrement composé de bits de la même valeur.

Le dispositif 100 comprend, en outre, un circuit (COMP) 20 de détection d'erreur. De préférence, le dispositif 100 comprend un unique circuit 20 de détection d'erreur. Les contenus des registres 14 et 16 sont donc vérifié par un même circuit 20. Le contenu des registres 14 et 16 est fourni successivement au circuit 20 par l'intermédiaire d'un circuit 18 (MUX). Le circuit 18 est par exemple un multiplexeur. Le circuit 18 est relié, de préférence connecté, en entrée à tous les registres 14 et 16. Le circuit 18 est relié, de préférence connecté, en sortie au circuit 20. Le circuit 18 comprend par exemple une sortie sur laquelle est fourni le mot de donnée du registre sélectionné, et une autre sortie sur laquelle est fourni le bit contenu dans la deuxième partie du registre sélectionné. Ces informations, c'est-à-dire le mot de donnée et le bit de vérification, sont fournies au circuit 20 de manière à être vérifiées.

Le circuit 18 est aussi relié, de préférence connecté, en entrée à un circuit 19 (CNT). Le circuit 19 est configuré pour fournir un signal de commande au circuit 18 déterminant le registre dont le contenu doit être fourni au circuit 20. Le circuit 19 reçoit en entrée un signal d'horloge CLK. Le circuit 19 est par exemple un compteur. Le circuit 19 est configuré pour que le contenu de tous les registres soit fourni au circuit 20 de manière cyclique.

Les registres sont associés aux bits du mot commun dans le même ordre que celui dans lequel les contenus des registres sont transmis au circuit 20 par le circuit 18.

Le circuit 22 est synchronisé par le même signal d'horloge CLK que le circuit 19. Ainsi, le circuit 19 fournit le signal commandant le transfert du contenu d'un des registres et le circuit 22 fournit le bit du mot commun correspondant à ce registre avant la fourniture d'un signal commandant le transfert du contenu du registre suivant, par exemple lors d'un même front du signal CLK.

La fonction f2 de chaque circuit 24, ou le résultat de la fonction f2, dépend de la valeur du bit du mot commun associé au registre correspondant audit circuit 24. La valeur contenue dans la deuxième partie de chaque registre est donc représentative du mot de donnée et du bit associé du mot commun. Par exemple, la fonction f2 correspond à une première opération si le bit du mot commun a une première valeur et correspond à une deuxième opération si le bit du mot commun a une deuxième valeur. Par exemple, si le bit du mot commun a la première valeur, la fonction f2 est la fonction identité, c'est-à-dire que le résultat de la fonction f2 est égal au résultat de la fonction f1, et si le bit du mot commun a la deuxième valeur, la fonction f2 est la fonction inverse, c'est-à-dire que le résultat de la fonction f2 est l'inverse, ou le complémentaire, du résultat de la fonction f1. L'inverse d'un bit de valeur '1' est un bit de valeur '0' et l'inverse d'un bit de valeur '0' est un bit de valeur '1'.

Autrement dit, la fonction f2 correspond par exemple à une fonction de type OU EXCLUSIF appliquée au bit du mot commun associé et à la valeur résultant de la fonction f1.

La fonction f2 possède une fonction inverse f2'. Les valeurs auxquelles sont appliquées les fonctions étant des valeurs binaires, la fonction f2' est la fonction complémentaire, c'est-à-dire la fonction selon laquelle :

[Math 1]

$$f2'(0) = \overline{f2}(0) = 1$$

**[Math 2]**

$$f2'(1) = \overline{f2}(1) = 0$$

Ainsi, le résultat de la fonction f2' appliquée au résultat de la fonction f2 est la valeur (x) à laquelle la fonction est appliquée. L'application de la fonction f2' à la fonction f2 correspond à la fonction identité, soit f2' (f2 (x)) - x.

De préférence, le mot commun est connu lors de la fabrication du dispositif 100. Les circuits 24, et donc la fonction f2, peuvent alors être différents selon la valeur associée à chaque registre. Par exemple, si le bit associé à un registre a la première valeur, le circuit 24 correspondant est un circuit fournissant en sortie la même valeur binaire qu'en entrée, par exemple une connexion électrique, et si le bit associé à un registre a la deuxième valeur, le circuit 24 correspondant est un inverseur.

Selon certaines normes, par exemple la norme ISO 26262 concernant la sécurité fonctionnelle des véhicules routiers, la vérification de registres comprend deux niveaux. Un premier niveau correspond à la vérification du contenu des registres. Un deuxième niveau correspond à la vérification du fonctionnement des éléments de vérification. En effet, si le mot de donnée est correct mais que le circuit de détection d'erreur comprend des fautes, une erreur peut être faussement détectée. Dans une autre situation, plus problématique, si le mot de donnée comprend une faute, par exemple causée par un rayonnement cosmique, et que le circuit de détection comprend une faute complémentaire, les deux fautes peuvent se compenser ou se masquer. L'erreur dans le mot de donnée ne serait donc pas détectée. Il est donc important de pouvoir détecter les fautes qu'elles proviennent de l'un ou l'autre des niveaux.

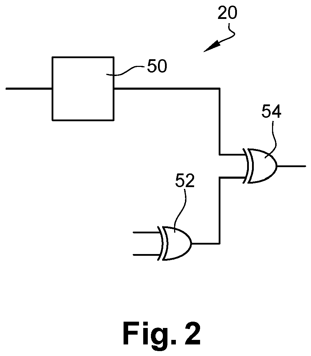

Un exemple de circuit 20 est représenté plus en détail en figure 2. Le circuit 20 est relié, de préférence connecté, en entrée aux sorties du circuit 18 et au circuit 22. Le circuit 20 est par exemple relié, de préférence connecté, en sortie à une mémoire 26 (MEM).

Le circuit 20 est configuré, lorsqu'il reçoit le contenu des première et deuxième parties d'un registre 14 ou 16, par l'intermédiaire du circuit 18, et le bit du mot commun associé audit registre, par le circuit 22, pour :

- a') appliquer la fonction f1 au contenu de la première partie du registre,
- b') appliquer la fonction f2' au contenu de la deuxième partie du registre, cette fonction f2' dépendant du bit du mot commun associé au registre, et
- c') comparer les résultats des étapes a') et b').

Les étapes a') et b') sont par exemple effectuées parallèlement.

Si le résultat de l'étape c') indique que les résultats sont identiques, autrement dit si le bit de vérification correspond au mot de donnée, un signal de sortie du circuit 20 prend une première valeur. Si le résultat de l'étape c') indique que les résultats sont différents, autrement dit si le bit de vérification ne correspond pas au mot de donnée, un signal de sortie du comparateur prend une deuxième valeur. La première valeur du signal de sortie indique que le mot de donnée correspond au mot stocké et donc que l'information stockée est correcte. La deuxième valeur du signal de sortie indique que le mot de donnée ne correspond pas à la valeur originelle souhaitée, et qu'il y a donc une erreur.

Ainsi, lors du fonctionnement du dispositif 100, le circuit 19 fournit, à un premier instant, un signal associé à l'un des registres 14 ou 16 au circuit 18. Le circuit 18 obtient le contenu des première et deuxième parties de ce registre, par exemple le mot de donnée REG1 et le bit de vérification PAR1. Ce contenu est fourni en sortie du circuit 18. Le circuit 20 reçoit donc en entrée le contenu des première et deuxième parties de ce registre. Le circuit 20 reçoit, de plus, en entrée le bit du mot commun associé audit registre. Le circuit 20 effectue les étapes a'), b') et c') décrites précédemment. Le signal de sortie généré par le circuit 20 permet de déterminer si le mot de donnée dudit registre est correct. Si cela n'est pas le cas, le système intégrant le dispositif prend des mesures adaptées au cas d'une donnée invalide à ne pas considérer. Par exemple, le système est réinitialisé, mis dans un état dégradé, etc.

A un deuxième instant, le circuit 19 fournit au circuit 18 un signal associé à un registre 14 ou 16 suivant. Le circuit 18 obtient le contenu des première et deuxième parties de ce registre, par exemple le mot de donnée REG2 et le bit de vérification PAR2. Un signal de sortie du circuit 20 est généré de la même manière que dans le cas du registre précédent. Le deuxième instant est de préférence suffisamment éloigné du premier instant pour que le signal de sortie du circuit 20 associé au premier registre soit généré avant le deuxième instant. Le deuxième instant correspond par exemple au front, par exemple montant, du signal d'horloge CLK suivant le premier instant.

De manière similaire, le même procédé de vérification est appliqué à tous les registres les uns après les autres. Par exemple, le procédé de vérification est appliqué au registre suivant lors de chaque front, par exemple montant, du signal d'horloge. Ainsi, un registre est vérifié à chaque cycle d'horloge. Une fois tous les registres vérifiés, le procédé est de nouveau effectué sur le premier registre. Le contenu des registres est ainsi vérifié en continu.

L'application du procédé de vérification de chaque registre est de préférence rapide. La durée entre la vérification de deux registres successifs est par exemple inférieure à 200 ms, de préférence inférieure à 50 ms. De préférence, la durée entre la vérification de deux registres successifs est telle que tous les registres peuvent être vérifiés dans un intervalle de temps de tolérance aux pannes (FTTI ou Fault Tolérance Time Interval). Par exemple, cet intervalle de temps est de 200 ms, ce qui correspond aux exigences de la norme ISO 26262 pour certains circuits d'un véhicule.

La vérification continue des registres, en particulier des registres 14, permet de déterminer la présence d'erreurs qui seraient apparues dans les mots de donnée lors de l'écriture du mot ou durant le stockage.

La vérification du contenu des registres 16 permet de déterminer si les circuits situés en aval des registres, c'est-à-dire sur le trajet entre les registres et le circuit 20 fonctionnent correctement, ce qui correspond au deuxième niveau de vérification. Par exemple, la vérification des registres 16 permet de déterminer la présence de fautes latentes dans les circuits en aval des registres. Par fautes latentes, on entend par exemple que les circuits, ou une des connexions sur lesquelles le contenu des registres est transmis, ne transmettent pas correctement un ou plusieurs bits. Par exemple, une faute latente dans le circuit 18 pourrait être à l'origine du fait que les signaux fournis en sortie ont un bit, par exemple le troisième bit, toujours à une même valeur, par exemple la valeur '0'. Ainsi, dans cet exemple, quel que soit le mot transmis, le troisième bit du mot reçu par le circuit 20 a la valeur '0'.

Etant donné que chaque bit du mot de référence à transmettre a la valeur '1' dans un registre 16 et la valeur '0' dans un autre registre 16, il est possible de déterminer si un bit du mot de référence est bloqué à une même valeur.

Par exemple, on considère le cas où le bit d'un rang donné d'un premier registre 16 a la valeur '1' et le bit de même rang d'un deuxième registre 16 a la valeur '0'. Si une erreur dans le dispositif est à l'origine du fait que, lors du transfert des contenus des registres vers le circuit 20, le bit de ce rang a toujours la valeur '1', le circuit 20 détectera, lors de la vérification du deuxième registre 16, que la valeur du bit de rang donné n'a pas la valeur '0', mais a la valeur '1'. Si une erreur dans le dispositif est à l'origine du fait que, lors du transfert des contenus des registres vers le circuit 20, le bit de ce rang a toujours la valeur '0', le circuit 20 détectera, lors de la vérification du premier registre 16, que la valeur du bit de rang donné n'a pas la valeur '1', mais a la valeur '0'.

Lors de la détection d'une erreur, le circuit 19 peut, par exemple, fournir la valeur du signal de commande du circuit 18, par exemple à l'unité 12. Il est donc possible de savoir dans quel registre l'erreur est apparue. La réaction du dispositif 100 lors de la détection d'une erreur peut par exemple être différente selon le registre dans lequel l'erreur a été détectée.

L'utilisation du mot commun dans la vérification du contenu permet d'assurer que les circuits 18, 19 et 22 fonctionnent correctement et que tous les registres 14 et 16 sont vérifiés dans l'ordre prévu. En effet, les circuits 19 et 22 sont configurés pour générer respectivement le signal de commande du circuit 18 correspondant à un registre et le bit du mot commun correspondant à ce registre, de telle manière que le circuit 20 peut utiliser le bit du mot commun associé au registre pour vérifier le contenu du registre.

Les circuits 18, 19 et 22 peuvent ne pas fonctionner correctement. Par exemple, le circuit 19 pourrait sauter une valeur. Autrement dit, le circuit 18 peut ne pas transférer le contenu d'un des registres dans le cycle. Le registre dont le contenu serait transféré au circuit 20 ne correspondrait donc pas au bit du mot commun fourni par le circuit 22. Il y aurait donc un décalage entre les contenus transférés et les bits du mot commun fournis au circuit 20. Si les deux bits successifs du mot commun sont égaux, cela ne serait pas détecté. Cependant, si les deux bits successifs du mot commun sont différents, le circuit 20 détecterait une erreur.

Par exemple, on considère que le mot commun associé aux registres 14 et 16 de la figure 2 est 00110. Ainsi, les bits du mot commun associés aux premier, deuxième, troisième, quatrième et cinquième registres, contenant respectivement les mots REG1, REG2, REG3, VIR1, VIR2, ont respectivement les valeurs '0', '0', '1', '1', '0'. On considère, en outre, que, par erreur, le circuit 19 ne fournit pas le signal commandant le transfert du contenu du premier registre, mais fournit le signal commandant le transfert du contenu du deuxième registre. Ainsi, le circuit 20 reçoit le contenu du deuxième registre et le bit du mot commun du premier registre. Comme les bits du mot commun associé aux premier et deuxième registres sont égaux, cette erreur n'est pas détectée. Par la suite, le circuit 19 fournit le signal commandant le transfert du contenu du registre suivant, c'est-à-dire le troisième registre, au circuit 20. Le circuit 22 fournit au circuit 20 le bit du mot commun suivant, c'est-à-dire le bit associé au deuxième registre. Le circuit 20 reçoit donc le contenu du troisième registre et le bit du mot commun associé au deuxième registre. Comme les bits du mot commun associés aux deuxième et troisième registres sont différent, le circuit 20 détecte une erreur.

Selon un mode de réalisation, les bits du mot commun associés aux registres de vérification sont égaux, de préférence égaux à la valeur pour laquelle la fonction f2 est la fonction identité. Chaque bit de vérification VPAR1, VPAR2 est alors obtenu en appliquant la fonction f1 au mot binaire écrit dans la première partie 16a du registre. La fonction f2 n'est pas appliquée. Ainsi, les deuxièmes parties 16b ne sont pas reliées à l'unité 12 par des circuits 24.

Le dispositif 100 tel que décrit peut aisément être associé à d'autres éléments de vérification de données. Par exemple, le dispositif 100 peut comprendre, en outre, un circuit 28 (CRC, figure 1) configuré pour détecter les erreurs de transmission ou de transfert. Le circuit 28 est par exemple un circuit de contrôle de redondance cyclique (CRC - Cyclic Redundancy Check).

La figure 2 représente plus en détail une partie de la figure 1.

Le circuit 20 comprend un circuit 50 configuré pour appliquer la fonction f1. Le circuit 50 reçoit en entrée le contenu de la première partie 14a ou 16a du registre 14 ou 16. Par exemple, le circuit 50 effectue une somme bit à bit des bits du mot de donnée, par exemple avec des circuits appliquant des fonctions de type OU EXCLUSIF.

Le circuit 20 comprend, en outre un circuit 52 appliquant la fonction f2' dépendant du bit du mot commun. Le circuit 52 reçoit en entrée le bit de vérification dudit registre et le bit du mot commun associé audit registre. Par exemple, le circuit 52 est une porte XOR. Ainsi, si le bit du mot commun a la première valeur ('0'), la fonction f2' est l'identité, et la sortie a la valeur du bit de vérification. Si le bit du mot commun a la deuxième valeur ('1'), la fonction f2' est la fonction inverse, ou complémentaire.

Le circuit 20 comprend un circuit 54 configuré pour déterminer si les sorties des circuits 50 et 52 sont identiques ou non. Le circuit 54 est par exemple un circuit appliquant une fonction du type OU EXCLUSIF. Le circuit 54 est par exemple une porte logique OU EXCLUSIF.

Un avantage des modes de réalisation décrits est qu'ils permettent la détection d'erreur dans le contenu des registres et dans le fonctionnement des composants de vérification.

Un autre avantage des modes de réalisation décrits est qu'ils permettent de s'assurer que tous les registres ont été vérifiés.

Un autre avantage des modes de réalisation décrits est qu'ils ne comprennent qu'un seul circuit 20 de détection d'erreur pour l'ensemble des registres 14 et 16.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

**Revendications**

1. Dispositif (100) comprenant :

au moins deux premiers registres (16), chaque premier registre (16) contenant un mot de donnée (VIR1, VIR2) et un bit de vérification (VPAR1, VPAR2), et
un premier circuit (20) configuré pour déterminer si le bit de vérification de chaque registre (16) correspond au mot de donnée dudit registre (16),
les mots de données des premiers registres (16) étant choisis de telle manière que les bits d'un même rang des premiers registres comprennent deux bits complémentaires, un mot binaire commun étant associé à l'ensemble des registres (16), le mot commun comprenant un bit associé à chaque registre (16), la valeur du bit de vérification de chaque registre dépendant du mot de donnée dudit registre et de la valeur du bit du mot commun associé audit registre.

2. Procédé comprenant, pour chaque registre (16) parmi au moins deux premiers registres (16) d'un dispositif, chaque premier registre contenant un mot de donnée (VIR1, VIR2) et un bit de vérification (VPAR1, VPAR2), une étape dans laquelle un premier circuit (20) détermine si le bit de vérification de chaque registre (16) correspond au mot de donnée dudit registre (16), les mots de données des premiers registres (16) étant choisis de telle manière que les bits d'un même rang des premiers registres comprennent deux bits complémentaires.

3. Dispositif selon la revendication 1 ou procédé selon la revendication 2, dans lequel le dispositif comprend au moins un deuxième registre (14), chaque deuxième registre contenant un mot de donnée (REG1, REG2, REG3) et un bit de vérification (PAR1, PAR2, PAR3).

4. Dispositif selon la revendication 1 ou 3 ou procédé selon la revendication 2 ou 3, comprenant un deuxième circuit (18) configuré pour fournir au premier circuit (20) le contenu de tous les registres les uns après les autres de manière cyclique.

5. Dispositif selon la revendication 1, 3 ou 4 ou procédé selon l'une quelconque des revendications 2 à 4, dans lequel chaque bit de vérification est obtenu lors de l'écriture du registre correspondant en appliquant une première fonction (f) au mot de donnée dudit registre.

6. Dispositif ou procédé selon la revendication 5, dans lequel le premier circuit (20) est configuré pour appliquer la première fonction (f) au mot de donnée contenu dans chaque registre et comparer le résultat au bit de vérification contenu dans ledit registre.

7. Dispositif ou procédé selon la revendication 5 ou 6, dans lequel la première fonction (f) comprend des deuxième (f2) et troisième (f1) fonctions, la deuxième fonction étant appliquée au résultat de la troisième fonction.

8. Dispositif selon la revendication 7, dans lequel chaque registre (14, 16) est relié à un circuit (12) configuré pour écrire dans les registres par un troisième circuit (24) configuré pour appliquer la deuxième fonction (f2) à la valeur du bit de vérification, la deuxième fonction dépendant de la valeur du bit du mot commun associé audit registre.

9. Dispositif selon la revendication 7 ou 8 ou procédé selon la revendication 7, dans lequel la deuxième fonction (f2) est une fonction de type OU EXCLUSIF.

10. Dispositif selon la revendication 8 ou 9 ou procédé selon la revendication 9, dans lequel si le bit associé audit registre a une première valeur, le troisième circuit (24) est une connexion électrique directe, et si le bit associé audit registre a une deuxième valeur, le troisième circuit est un inverseur.

11. Dispositif selon l'une quelconque des revendications 8 à 10 ou procédé selon l'une quelconque des revendications 9 à 10, dans lequel le premier circuit (20) est configuré pour :

   appliquer la fonction inverse (f2') de la deuxième fonction (f2) au bit de vérification ;
   appliquer la première fonction (f1) au mot de donnée contenu dans ledit registre ; et
   comparer les résultats.

12. Dispositif selon l'une quelconque des revendications 8 à 11 ou procédé selon l'une quelconque des revendications 9 à 11, dans lequel le premier circuit comprend un quatrième circuit (50) configuré pour appliquer la troisième fonction (f1) au mot de donnée contenu dans le registre, un cinquième circuit (52) configuré pour appliquer une fonction du type OU EXCLUSIF recevant en entrée le bit de vérification du registre et le bit du mot commun associé au registre et un sixième circuit (54) configuré pour appliquer une fonction du type OU EXCLUSIF recevant en entrée la sortie du quatrième circuit et la sortie du cinquième circuit.

**Patentansprüche**

1. Eine Vorrichtung (100), die Folgendes aufweist:

   mindestens zwei erste Register (16), wobei jedes erste Register (16) ein Datenwort (VIR1, VIR2) und ein Verifikationsbit (VPAR1, VPAR2) enthält, und
   eine erste Schaltung (20), die konfiguriert ist zum Bestimmen, ob das Verifizierungsbit jedes Registers (16) dem Datenwort des Registers (16) entspricht,
   wobei die Datenwörter der ersten Register (16) so ausgewählt werden, dass die Bits eines gleichen Ranges der ersten Register zwei komplementäre Bits aufweisen, wobei ein gemeinsames binäres Wort allen Registern (16) zugeordnet ist, wobei das gemeinsame Wort ein mit jedem Register (16) assoziiertes Bit aufweist, wobei der Wert des Verifizierungsbits jedes Registers von dem Datenwort des Registers und von dem Wert des Bits das mit dem Register assoziierten gemeinsamen Wortes abhängt.

2. Verfahren, das für jedes Register (16) unter mindestens zwei ersten Registern (16), wobei jedes erste Register ein Datenwort (VIR1, VIR2) und ein Verifizierungsbit (VPAR1, VPAR2) enthält, einen Schritt aufweist, in dem eine Schaltung (20) bestimmt, ob das Verifizierungsbit jedes Registers (16) dem Datenwort des Registers (16) entspricht, wobei die Datenwörter der ersten Register (16) so ausgewählt werden, dass die Bits eines gleichen Ranges der ersten Register zwei komplementäre Bits aufweisen.

3. Vorrichtung nach Anspruch 1 oder das Verfahren nach Anspruch 2, wobei die Vorrichtung mindestens ein zweites Register (14) aufweist, wobei jedes zweite Register ein Datenwort (REG1, REG2, REG3) und ein Verifikationsbit (PAR1, PAR2, PAR3) enthält.

4. Vorrichtung nach Anspruch 1 oder 3 oder Verfahren nach Anspruch 2 oder 3, aufweisend eine zweite Schaltung (18), die konfiguriert ist zum zyklischen Liefern des Inhalt aller Register nacheinander an die erste Schaltung (20).

5. Vorrichtung nach Anspruch 1, 3 oder 4 oder das Verfahren nach einem der Ansprüche 2 bis 4, wobei jedes Verifikationsbit beim Schreiben in das entsprechende Register durch Anlegen einer ersten Funktion (f) an das Datenwort des Registers erhalten wird.

6. Vorrichtung oder Verfahren nach Anspruch 5, wobei die erste Schaltung (20) konfiguriert ist zum Anlegen der ersten Funktion (f) an das in jedem Register enthaltene Datenwort und zum Vergleichen des Ergebnisses mit dem in dem Register enthaltenen Verifikationsbit.

7. Vorrichtung oder Verfahren nach Anspruch 5 oder 6, wobei die erste Funktion (f) eine zweite (f2) und eine dritte (f1) Funktion aufweist, wobei die zweite Funktion auf das Ergebnis der dritten Funktion angewendet wird.

8. Vorrichtung nach Anspruch 7, wobei jedes Register (14, 16) mit einer Schaltung (12) gekoppelt ist, die konfiguriert ist zum Schreiben in die Register über eine dritte Schaltung (24), die konfiguriert ist zum Anlegen der zweiten Funktion (f2) an den Wert des Verifizierungsbits, wobei die zweite Funktion von dem Wert des Bits des gemeinsamen Worts abhängt, das mit dem Register assoziiert ist.

9. Vorrichtung nach Anspruch 7 oder 8 oder das Verfahren nach Anspruch 7, wobei die zweite Funktion (f2) eine Funktion vom XOR-Typ ist.

10. Vorrichtung nach Anspruch 8 oder 9 oder Verfahren nach Anspruch 9, wobei, wenn das mit dem Register assoziierte Bit einen ersten Wert hat, die dritte Schaltung (24) eine direkte elektrische Verbindung ist, und wenn das mit dem Register assoziierte Bit einen zweiten Wert hat, die dritte Schaltung ein Inverter ist.

11. Vorrichtung nach einem der Ansprüche 8 bis 10 oder Verfahren nach einem der Ansprüche 9 oder 10, wobei die erste Schaltung (20) konfiguriert ist, zum:

Anlegen der Umkehrfunktion (f2') der zweiten Funktion (f2) an das Verifikationsbit;
Anlegen der ersten Funktion (f1) an das in dem Register enthaltene Datenwort; und
Vergleichen der Ergebnisse.

12. Vorrichtung nach einem der Ansprüche 8 bis 11 oder Verfahren nach einem der Ansprüche 9 bis 11, wobei die erste Schaltung folgendes aufweist: eine vierte Schaltung (50), die konfiguriert ist zum Anlegen der dritten Funktion (f1) an das in dem Register enthaltene Datenwort, eine fünfte Schaltung (52), die konfiguriert ist zum Anlegen einer Funktion vom XOR-Typ, die als Eingang das Verifikationsbit des Registers und das Bit des mit dem Register assoziierten gemeinsamen Worts empfängt, und eine sechste Schaltung (54), die konfiguriert ist zum Anlegen einer Funktion vom XOR-Typ, die als Eingang den Ausgang der vierten Schaltung und den Ausgang der fünften Schaltung empfängt.

**Claims**

1. A device (100) comprising:

at least two first registers (16), each first register (16) containing a data word (VIR1, VIR2) and a verification bit (VPAR1, VPAR2), and
a first circuit (20) configured to determine whether the verification bit of each register (16) corresponds to the data word of said register (16), the data words of the first registers (16) being selected so that the bits of a same rank of the first registers comprise two complementary bits, a common binary word being associated with all the registers (16), the common word comprising a bit associated with each register (16), the value of the verification bit of each register depending on the data word of said register and on the value of the bit of the common word associated with said register.

2. A method comprising, for each register (16) among at least two first registers (16), each first register containing a data word (VIR1, VIR2) and a verification bit (VPAR1, VPAR2), a step in which a circuit (20) determines whether the verification bit of each register (16) corresponds to the data word of said register (16), the data words of the first registers (16)

**EP 3 893 117 B1**

being selected so that the bits of a same rank of the first registers comprise two complementary bits.

3. The device according to claim 1 or the method according to claim 2, wherein the device comprises at least a second register (14), each second register containing a data word (REG1, REG2, REG3) and a verification bit (PAR1, PAR2, PARS).

4. The device according to claim 1 or 3 or the method according to claim 2 or 3, comprising a second circuit (18) configured to cyclically deliver to the first circuit (20) the content of all the registers one after the others.

5. The device according to claim 1, 3 or 4 or the method according to any of claims 2 to 4, wherein each verification bit is obtained on writing into the corresponding register by applying a first function (f) to the data word of said register.

6. The device or the method according to claim 5, wherein the first circuit (20) is configured to apply the first function (f) to the data word contained in each register and compare the result with the verification bit contained in said register.

7. The device or the method according to claim 5 or 6, wherein the first function (f) comprises second (f2) and third (f1) functions, the second function being applied to the result of the third function.

8. The device according to claim 7, wherein each register (14, 16) is coupled to a circuit (12) configured to write into the registers by a third circuit (24) configured to apply the second function (f2) to the value of the verification bit, the second function depending on the value of the bit of the common word associated with said register.

9. The device according to claim 7 or 8 or the method according to claim 7, wherein the second function (f2) is an XOR-type function.

10. The device according to claim 8 or 9 or the method according to claim 9, wherein, if the bit associated with said register has a first value, the third bit (24) is a direct electric connection, and if the bit associated with said register has a second value, the third circuit is an inverter.

11. The device according to any of claims 8 to 10 or the method according to any of claims 9 or 10, wherein the first circuit (20) is configured to:

   apply the inverse function (f2') of the second function (f2) to the verification bit;
   apply the first function (f1) to the data word contained in said register; and
compare the results.

12. The device cording to any of claims 8 to 11 or the method according to any of claims 9 to 11, wherein the first circuit comprises a fourth circuit (50) configured to apply the third function (f1) to the data word contained in the register, a fifth circuit (52) configured to apply an XOR-type function receiving as an input the verification bit of the register and the bit of the common word associated with the register, and a sixth circuit (54) configured to apply an XOR-type function receiving as an input the output of the fourth circuit and the output of the fifth circuit.

**Fig. 1**

**Fig. 2**

**EP 3 893 117 B1**

## RÉFÉRENCES CITÉES DANS LA DESCRIPTION

**Documents brevets cités dans la description**

- US 2017060673 A